(19) **Europäisches Patentamt**
**European Patent Office**
**Office européen des brevets**

(11) **EP 1 272 858 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*G01P 21/02* (2006.01)     *G01P 3/489* (2006.01)
*F02D 41/34* (2006.01)

(21) Anmeldenummer: **01915014.3**

(86) Internationale Anmeldenummer:
**PCT/DE2001/000594**

(22) Anmeldetag: **16.02.2001**

(87) Internationale Veröffentlichungsnummer:
**WO 2001/077692 (18.10.2001 Gazette 2001/42)**

(54) **VERFAHREN ZUR KOMPENSATION DER DREHUNFÖRMIGKEIT BEI DER DREHZAHLERFASSUNG**

METHOD FOR COMPENSATING THE ROTATIONAL SHAPELESSNESS DURING DETECTION OF THE REVOLUTIONS PER MINUTE

PROCEDE DE COMPENSATION DE LA DIFFORMITE ROTATIVE LORS DE LA DETECTION DE LA VITESSE DE ROTATION

(84) Benannte Vertragsstaaten:
**DE ES FR GB IT SE**

(30) Priorität: **06.04.2000 DE 10017107**

(43) Veröffentlichungstag der Anmeldung:
**08.01.2003 Patentblatt 2003/02**

(73) Patentinhaber: **ROBERT BOSCH GMBH**
**70442 Stuttgart (DE)**

(72) Erfinder:
• **PALMER, Joachim**
**70825 Korntal-Münchingen (DE)**
• **SAMUELSEN, Dirk**
**71636 Ludwigsburg (DE)**
• **FEHRMANN, Ruediger**
**71229 Leonberg (DE)**

(56) Entgegenhaltungen:
**DE-A- 19 540 674      US-A- 5 117 681**
**US-A- 5 377 535      US-A- 5 528 931**
**US-A- 6 021 758**

EP 1 272 858 B1

**Beschreibung**

Technisches Gebiet

Bei der Drehzahlerfassung an Verbrennungskraftmaschinen werden Geberräder eingesetzt, deren mit einer Außenverzahnung versehene Umfangsflächen von Drehzahlgebern abgetastet werden. Je genauer die Erfassung von Drehwinkel einer Kurbelwelle einer Verbrennungskraftmaschine sowie der Drehzahl derselben am Geberrad erfaßt werden kann, desto vorteilhafter ist das Regelverhalten eines Regelkreises zur Steuerung der Verbrennungsmaschine.

Stand der Technik

Die Winkelerfassung des Kurbelwinkels $\alpha$ der Kurbelwelle einer Verbrennungskraftmaschine erfolgt über ein Geberrad, welches an seinem Umfang gleichmäßig verteilt z Zähne aufweist. Der Winkelabstand zwischen den Zähnen des Geberrades beträgt $\alpha_{Sm}$. Mittels eines Drehzahlgebers, der als ein Sensorelement ausgebildet sein kann, wird der Zeitpunkt detektiert, zu dem ein Zahn den Drehzahlgeber passiert. Mittels einer dem Drehzahlgeber nachgeschalteten Erfassungseinrichtung wird die Zeitdifferenz zweier aufeinander folgender Zähne detektiert, die Segmentzeit $t_s$. Aus dem Kehrwert der gemessenen Segmentzeit $t_s$ wird die Drehzahl gemäß der nachfolgenden Beziehung

$$\tilde{n}\,(k) = \frac{a_{sm}}{2\,\pi}\;\frac{1}{t_s\,(k)}$$

ermittelt. Der Winkel zwischen zwei Zähnen des Geberrades läßt sich auf der Basis der zuletzt gemessenen Segmentzeit $t_S(k-1)$ gemäß nachfolgender Beziehung interpolieren:

$$\alpha\,(t) = \alpha_{Sm}\;\frac{t}{t_s\,(k-1)}$$

Die Drehzahl- und Winkelwerte $\tilde{n}\,(k)$ und $\alpha\,(t)$ können durch Toleranzeinflüsse verfälscht werden. Zu solchen Toleranzeinflüssen sind Teilungsfehler am Geberrad, Anbaufehler von Drehzahlgeber und Geberrad an der Stirnseite der Kurbelwelle sowie Sensortoleranzen zu zählen. Dadurch weichen die einzelnen Segmentwinkel $\alpha_S\,(k)$ vom Idealwert $\alpha_{Sm}$ nicht unerheblich ab.
Um die Folgen fertigungs- und montagetechnisch bedingter auftretender Toleranzen abzumildern, werden bei heutigen Anwendungen der Drehzahlerfassung nur einzelne, ausgewählte Zähne zur Signalermittlung undauswertung herangezogen. Dadurch läßt sich zwar eine Verringerung des relativen Winkelfehlers $\dfrac{\Delta\alpha_s}{\alpha_{Sm}}$ erzielen, jedoch wird dieser Vorteil durch eine Phasenverschiebung des Signales $t_S\,(k)$ erkauft, was nicht unerhebliche Nachteile in regelungstechnischer Hinsicht nach sich zieht.
Soll eine korrekte Winkelerfassung erfolgen, verbietet sich die Auswertung von Winkelsignalen, die an beliebig herausgegriffenen Zähnen des Geberrades ermittelt werden. Die Segmentzeiten $t_S\,(k)$ können auch bei einem idealen Geberrad an der Kurbelwelle aufgrund der Drehunförmigkeit des Verbrennungsmotores stark schwanken. Werden zu wenig Zähne des Geberrades zur Drehzahlermittlung ausgewertet werden, liefert die Gleichung

$$\alpha\,(t) = \alpha_{Sm}\;\frac{t}{t_s\,(k-1)}$$

Ergebnisse, die grob von den tatsächlichen Gegebenheiten abweichen können.
Aus DE-OS 44 06 606 ist eine Adaptionseinrichtung für ein Geberrad an einem Verbrennungsmotor bekannt geworden. Ein Geberrad wird dazu verwendet, Drehzahländerungen eines Verbrennungsmotors mit hoher Genauigkeit zu erfassen, um aus diesen einen Laufunruhewert zu berechnen. Ein solches Geberrad weist z.B. drei Segmente auf, die idealer Weise gleich lang sind, jedoch in der Realität meistens leicht voneinander abweichende Längen aufweisen. Um dadurch bedingte Meßfehler bei der Erfassung von Drehzahländerungen zu vermeiden, ist es bekannt, die tatsächlichen Längen durch ein Adaptionsverfahren zu ermitteln. Die erfindungsgemäße Vorrichtung ist so aufgebaut, daß sie für jedes Segment über mehrere Adaptionsfilter verfügt, um verschiedene Adaptionswerte für verschiedene Drehzahlbereiche zu erfassen. Es hat sich herausgestellt, daß in unterschiedlichen Drehzahlbereichen unterschiedliche Längen gemessen werden, was ein Fehler ist, der kompensiert werden muß, da die Länge eines Segmentes tatsächlich dauernd konstant ist.

DE 195 40 674 A1 bezieht sich auf Adaptionsverfahren zur Korrektur von Toleranzen eines Geberrades. Es werden aus den aktuell gemessenen Zahnzeit- bzw. Segmentzeitwerten $t_n$ eine mittlere Zahnzeit $\overline{T}$ berechnet, wobei die aktuellen Zahnzeitwerte $t_n$ auf die mittlere Zahnzeit $\overline{T}$ normiert werden. Es wird bestimmt, in welchem Drehzahlbereich sich die Brennkraftmaschine befindet und abhängig vom ermittelten Drehzahlbereich für jeden Zahn (1, , .....j.....Z) ein Adaptionsfaktor $\alpha_{ij}$ festgelegt. Die normierten Zahnzeiten $T_{norm}(n)$ werden zur Korrektur des zum j-ten Zahns im i-ten Drehzahlbereich T-gehörenden Adaptionsfaktor $\alpha_{ij}$ herangezogen. Aus den korrigierten Adaptionsfaktoren wird ein Korrekturfaktor für jeden Zahn bzw. jedes Segment berechnet und zur Korrektur des j-ten Zahnzeitwertes T(n) herangezogen.

US 5,377,535 hat ein Verfahren zur Identifizierung und Korrektur von Fehlern bei Zeitmeßvorgängen an rotierenden Bauteilen zum Gegenstand. Es wird offenbart, daß eine Kurbelwelle, oder eine daran aufgenommene Geberscheibe, an welcher Marken ausgebildet sind, durch eine dieser zugeordneten Sensor abgetastet. Gemäß eines Verfahrens zur Identifizierung und Korrektur von Fehlern bei der Bestimmung von Segmentzeiten wird eine Referenzsegmentzeit $TG_0$ gemessen und gespeichert und einem Referenzzylinder der Verbrennungskraftmaschine zugeordnet. Daran schließt sich die Summation von Segmentzeiten $TG_n$ an, welche Kurbelwellensegmenten der verbleibenden Zylinder der Verbrennungskraftmaschine entsprechen. Danach wird eine neue Segmentzeit $TG_0$ des Referenzsegmentes, welches dem Referenzzylinder der Verbrennungskraftmaschine zugeordnet ist, zwei Kurbelwellenumdrehungen später aufgenommen. Es werden Korrekturwerte $AZ_n$ für jeden Zylinder bestimmt. Die Korrekturwerte $AZ_n$ werden nachfolgend gemittelt, wobei die gemittelten Korrekturwerte $AZM_n$ gespeichert werden und mit diesen gemäß den Segmentzeiten $TG_n$ zur Bildung korrigierter Segmentzeiten verknüpft werden. Die Korrekturwerte werden bei Schubbetrieb der Verbrennungskraftmaschine und in einem dafür geeigneten Drehzahlbereich der Verbrennungskraftmaschine ermittelt.

US 6,021,758 hat ein Verfahren und eine Vorrichtung zum Ausgleich von Drehmomentungleichförmigkeiten von Zylindern einer Verbrennungskraftmaschine zum Gegenstand. Fluktuationen in der Drehzahl der Verbrennungskraftmaschine und zur Detektion von Drehzahlungleichförmigkeiten werden durch Beeinflussung der Einspritzzeitpunkte eines jeden individuellen Zylinders korrigiert. Mittels einer 6-Punkte-FFT wird die Drehgeschwindigkeit der Verbrennungskraftmaschine über einen vollständigen Arbeitszyklus berechnet. Eine ungleichförmig drehende Verbrennungskraftmaschine weist 0-Punkt-Ordnungen der FFT-Komponenten auf, die zur 0,5-ten, ersten Hauptordnung und zur 1,5-ten Ordnung der Verbrennungskraftmaschine korrespondieren. Mittels eines iterativen Verfahrens wird gemäß dieser Lösung bei einer als ungleichförmig laufend erkannten Verbrennungskraftmaschine die Größe dieser Ordnungen gegen Null geführt.

Mittels der erfindungsgemäß vorgeschlagenen Verfahren zur genauen Erfassung von Winkel und Drehzahl werden gemessene Segmentzeiten $t_S$ (k) um gelernte Geberradfehler korrigiert, so daß sich die überlagernden Einflüsse von Geberradfehlern und Drehunförmigkeit des Verbrennungsmotors voneinander trennen lassen.

Mit einem der erfindungsgemäß vorgeschlagenen Verfahren wird die Drehunförmigkeit des Verbrennungsmotors aus dem Betriebspunkt des Motors, der durch die Drehzahl n, den Ladedruck $p_1$, sowie die Einspritzmenge $m_E$ definiert ist, rekonstruiert. Dazu kann das Drehmoment durch dessen Gleichanteil $M_0$ sowie n harmonische der ersten Hauptordnung des Verbrennungsmotors beschrieben werden.

Anstelle der Rekonstruktion der Drehunförmigkeit der Verbrennungskraftmaschine aus einem speziellen, wohldefinierten Betriebspunkt, kann die Drehunförmigkeit der Verbrennungskraftmaschine anhand der Frequenzanteile der Hauptordnungen des Motors bestimmt werden. Für diese Frequenzanteile lassen sich im Wege diskreter Fourier-Transformationen, über jeweils eine Kurbelwellenumdrehung der Betrag $c_j$ und Phase $\varphi_J$ der zugehörigen Segmentzeitschwankung bestimmen.

Zeichnung

Anhand der Zeichnung wird die Erfindung nachstehend näher erläutert.

Es zeigt:

Fig. 1a    die Winkelerfassung eines Geberrades durch einen Drehzahlgeber samt Auswertungsschaltung,

Fig. 1b    eine Drehzahlerfassung an ausgewählten Zähnen am Umfang eines Geberrades, wobei für die Signalauswertung eine Mittelwertbildung vorgesehen ist,

Fig. 1c      eine schematische Darstellung der erfindungsgemäß vorgeschlagenen Fehlerermittlungsroutine mit einer Trennstufe,

Fig. 2       die Gegenüberstellung eines Winkelsystemes von fehlerbehafteten Geberrad gegenüber dem wahren Winkel der Verbrennungskraftmaschine,

Fig. 3       die Ausfilterung der Drehunförmigkeit des Verbrennungsmotors mittels eines Referenzmodelles und

Fig. 4       das Ausfiltern der Drehunförmigkeit des Verbrennungsmotors mit n-Ordnungen entsprechenden Fourier-Transformationsstufen.

Ausführungsvarianten

Fig. 1a gibt die Bestimmung von Segmentzeiten mit einem Geberrad gemäß einer Lösung aus dem Stand der Technik wieder.
Ein Geberrad 1, dessen Umfangsfläche 2 mit k Zähnen, beispielsweise 60 Zähnen versehen ist, ist an einer Geberradwelle 4 aufgenommen und rotiert im Drehsinn 3. Der Drehwinkel 5, der die Drehrichtung des Geberrades 1 identifiziert, ist mit $\alpha$ bezeichnet. Die einzelnen Zähne 11 sind mit aufeinander folgenden Abständen am Umfang 2 des Geberrades 1 aufgenommen. Die Zahnflanken der einzelnen Zähne 11 werden von einem Signalgeber 6 abgetastet, dem eine Signalauswertung 7 mit integrierter Zeiterfassung 8 nachgeordnet ist. Am Ausgang der Signalauswertung 7 steht als Ausgangssignal die ermittelte Segmentzeit $t_S$ (k), mit Bezugszeichen 9 bezeichnet, an.
Der Abstand der einzelnen am Umfang 2 des Geberrades 1 aufgenommenen Zähne 11 beträgt $\alpha_{SM}$. Die Drehzahl wird aus dem Kehrwert der gemessenen Segmentzeit $t_S$ (k) bestimmt:

$$\tilde{n}(k) = \frac{\alpha_{SM}}{2\pi} \cdot \frac{1}{t_s(k)}$$

Der Drehwinkel 5 wird zwischen zwei Zähnen 11 unter Verwendung der aktuellen Zeit t seit Abtastung des letzten Zahns sowie der zuvor gemessenen Segmentzeit $t_S$(k - 1) interpoliert.

$$\alpha(t) = \alpha_{SM} \frac{t}{t_s(k-1)}$$

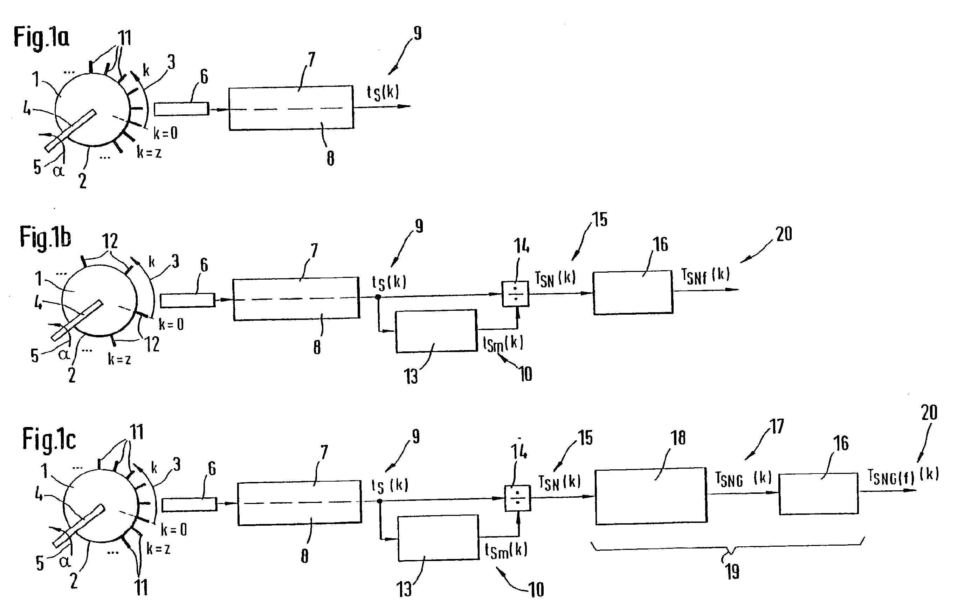

In Fig. 1b ist eine Drehzahlerfassung an ausgewählten Zähnen 12 am Umfang eines Geberrades dargestellt, wobei der Signalauswertung eine Signalmittelwertbildung implementiert ist.
Von der Gesamtheit der am Umfang 2 des Geberrades 1 aufgenommenen Zähne 11 werden lediglich ausgewählte Zähne 12 zur Signalauswertung 7, 8 herangezogen. Die Zähne 12 werden häufig so ausgewählt, daß die Drehzahlförmigkeit des Verbrennungsmotors bei der Zeitmessung 8 nicht in Erscheinung tritt. Analog zur in Fig. 1a wiedergegebener Darstellung werden die ausgewählten Zähne 12 durch einen Signalgeber 6 abgetastet, dessen Signal an eine Signalauswertung 7 samt integrierter Zeitmessung 8 übertragen wird. Deren Ausgangssignal $t_S$ (k), der Segmentzeit entsprechend und mit Bezugszeichen 9 identifiziert, wird sowohl einer Korrektureinheit 14 zugeleitet als auch in einer Mittelwertbildungsstufe 13 in eine mittlere Segmentzeit $t_{SM}$ (k) umgewandelt. Sowohl das Ausgangssignal der Signalauswertung 7 $t_S$ (k) als auch die mittlere Segmentzeit $t_{SM}$ (k) werden der Korrektureinheit 14 zugeleitet, welche ihrerseits eine normierte Segmentzeit $T_{SN}$ (k) ermittelt, mit Bezugszeichen 15 bezeichnet. Dieses Ausgangssignal der Korrekturstufe 14 wird an eine Lernstufe übertragen, in welcher aus dem Signal $T_{SN}$ (k) derjenige Signalteil gelernt wird, der von den Geberradfehlern herrührt. Das die Lernstufe 16 verlassende Signal $T_{SNF}$ (k), mit Bezugszeichen 20 bezeichnet, stellt die Segmentzeitabweichungen aufgrund von Geberradfehlern dar.
In der Darstellung gemäß Fig. 1c ist eine schematische Darstellung der erfindungsgemäß vorgeschlagenen Fehlerroutine wiedergegeben.
Das Geberrad 1, auf dessen Umfangsfläche 2 sich eine Vielzahl von Zähnen 11 befindet, hier mit dem Laufindex von k = 0 von k = z bezeichnet, wird über ein Signalgeber 6 abgetastet. Das Geberrad 1 befindet sich auf einer Geberradwelle 4 aufgenommen, welche im Drehsinn 5 rotiert. Die Signale des Signalgebers 6 werden an eine Signalauswertung 7 mit integrierter Zeitmessung übertragen, deren Ausgangssignal die Segmentzeit $t_S$ (k), mit Bezugszeichen 9 bezeichnet, darstellt. Analog zur in Fig. 1b wiedergegebenen Darstellung wird die Segmentzeit $t_S$ (k) sowohl einer Mittelwertbildungsstufe 13 als auch einer Korrektureinheit zugeleitet. Aus der Segment zeit $t_S$ (k) wird durch die Mittelung über eine Kurbelwellenumdrehung die mittlere Segmentzeit $t_{SM}$ (k) berechnet, mit Bezugszeichen 10 bezeichnet. Dieses Signal wird ebenfalls der Korrektureinheit 14 zugeführt. Der Korrektureinheit wird das Signal der nonnierten Segmentzeit $T_{SN}$ (k) aus der Division von der Segmentzeit $t_S$(k) durch $t_{SM}$ (k) ermittelt. Die normierte Segmentzeit 15 wird innerhalb einer Fehlerroutine 19 korrigiert. Die Fehlerroutine 19 enthält eine Trennstufe 18, in welcher die Trennung der Geberradfehler von den Motoreffekten wie beispielsweise der Drehunförmigkeit erfolgt. Das aus der Trennstufe 18 hervorgehende Signal $T_{SNG}$ (k) stellt die Wechselanteile des Signales am Filterausgang dar und ist im stationären Betrieb der Verbrennungskraftmaschine ausschließlich auf Geberradfehler zurückzuführen. Sie werden mit einem der Trennstufe 18 nachgeschalteten Adaptionsverfahren innerhalb eines Lemfilters 16 ausgewertet. Am Ausgang der Lernstufe 16 stehen die gelernten Segmentzeitabweichungen aufgrund von Geberradfehlern in Form des Signales $T_{SNGf}$ (k) zur Verfügung, mit Bezugszeichen 20 identifiziert.

Liegt das Signal 20, d.h. die Segmentzeitabweichungen aufgrund von Geberradfehlem $T_{SNGf}$ (k) vor, können anstelle der verfälschten Drehzahl ñ (k) die von Geberradfehlem bereinigten Drehzahlsignale $n_1$ (k) und $n_2$ (k) erzeugt werden:

$$n_1 \ (k) = \frac{\alpha_{SM}}{2\pi} \cdot \frac{1}{t_S \ (k) \cdot \left[1 - T_{SNGF} \ (k)\right]}$$

und

$$n_2 \ (k) = \frac{\alpha_{SM}}{2\pi} \cdot \frac{1}{t_{SM} \ (k) \cdot T_{SNG} \ (k) \cdot \left[1 - T_{SNGf} \ (k)\right]}$$

Das Signal $n_1$ (k) enthält im Gegensatz zum Drehzahlsignal $n_2$ (k) die Drehunförmigkeit der Verbrennungskraftmaschine.

Das Ausgangssignal 20 kann außerdem dazu benutzt werden, um eine genauere Winkelinterpolation zwischen zwei Zähnen 11 des Geberrades 1 zu erzielen. Um eine Systemaktion (zum Beispiel das Schalten eines Magnetventiles in der Kraftstoffversorgung) beim Winkel $\alpha_{Soll}$ zu erreichen, muß der wahre Winkel $\alpha_{Soll}$ in das fehlerbehaftete Winkelsystem $\alpha^*$ des Geberrades 1 abgebildet werden. Dies erfolgt gemäß der nachfolgend wiedergegebenen Beziehung:

$$\alpha^*{}_{Soll} = (\alpha_{Soll} - \Delta \alpha) \cdot \left[1 - T_{SNGf} \ (k-1)\right]$$

$\Delta\alpha$ ist die Abweichung des Zahnes 11 mit der Adresse k - 1 gegenüber dem wahren Winkel.

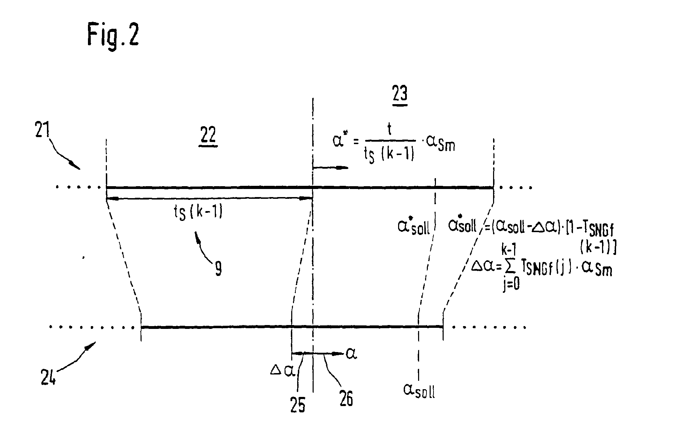

In Fig. 2 ist die Gegenüberstellung eines Winkelsystems an einem fehlerbehafteten Geberrad 1 dem wahren Winkel der Verbrennungskraftmaschine gegenübergestellt. Mit Bezugszeichen 21 ist das Winkelsystem des fehlerhaften Geberrades 1 bezeichnet, während Bezugszeichen 24 den tatsächlichen Winkel der Verbrennungskraftmaschine bezeichnet. Mit 22 ist ein beliebiger Zahn 11 des Geberrades 1 identifiziert, während mit Bezugszeichen 23 der Folgezahn am Geberrad 1 gekennzeichnet sein soll. Die Abweichung $\delta\alpha$ eines Zahnes mit der Adresse "k-1" gegenüber dem wahren Winkel 24 der Verbrennungskraftmaschine läßt sich aus der nachfolgenden Beziehung bestimmen:

$$\Delta\alpha = \sum_{j=0}^{k-1} T_{SNGf} \ (j) \cdot \alpha_{SM}$$

Mit $\alpha_{SM}$ Winkelabstand der Zähne 11 am Umfang 2 des Geberrades 2.

Der Winkelversatz ist in der Fig. 2 mit Bezugszeichen 25 bezeichnet, während der Kurbelwellenwinkel mit $\alpha$

bezeichnet ist.

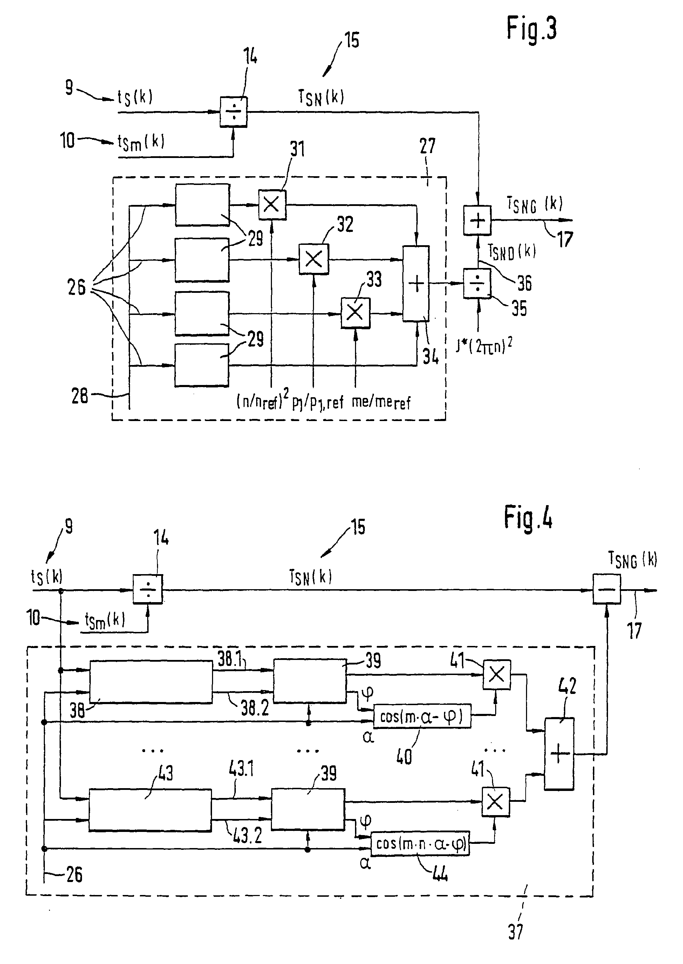

In den Fig. 3 und 4 sind zwei erfindungsgemäße Verfahren zur Ausfilterung der Drehunförmigkeit des Verbrennungsmotores mittels eines Referenzmodelles bzw. mittels einer Fourier-Transformation wiedergegeben.

Diese Ausfilterungsverfahren zur Drehunförmigkeit der Verbrennungskraftmaschine sind innerhalb der Fehlerroutine 19 gemäß Fig. 1c in der Trennstufe 18 implementiert. Die Trennstufe 18 enthält entweder das Referenzmodul 27 gemäß Fig. 3 oder einen Ordnungsfilter 37 gemäß der Fig. 4, wie nachfolgend dargestellt werden wird.

Mittels des in Fig. 3 wiedergegebenen Referenzmodells 27 wird die Drehunförmigkeit des Verbrennungsmotores aus dem Betriebspunkt des Motors, der durch die Drehzahl n, den Ladedruck $p_1$ sowie die Einspritzmenge $m_E$ definiert wird, abgebildet. Das Drehmoment einer Verbrennungskraftmaschine kann durch seinen Gleichanteil $M_0$ sowie n Harmonische der ersten Hauptordnung der Verbrennungskraftmaschine beschrieben werden:

$$M(\alpha) = M_0 + \sum_{j=1}^{n} M_{j,0} \cdot \cos\left(m \cdot j \cdot \alpha - \varphi_{j,0}\right) + \sum_{j=1}^{n} M_{j,n} \cdot \frac{n^2}{n_{ref}^2} \cdot \cos\left(m \cdot j \cdot \alpha - \varphi_{j,n}\right) + \sum_{j=1}^{n} M_{j,pl} \cdot \frac{p_1}{p_{1,ref}} \cdot \cos\left(m \cdot j \cdot \alpha - \varphi_{j,pl}\right) + \sum_{j=1}^{n} M_{j,me} \cdot \frac{me}{me_{ref}} \cdot \cos\left(m \cdot j \cdot \alpha - \varphi_{j,me}\right)$$

m stellt die Ordnungszahl der ersten Hauptordnung und $\alpha$ den Kurbelwinkel 26 der Verbrennungskraftmaschine dar. Für einen gegebenen Betriebspunkt können die einzelnen Wechseldrehmomente in obiger Gleichung zum resultierenden Wechseldrehmoment $M_{J, RES}$ zusammengefaßt werden:

$$M(\alpha) = M_0 + \sum_{j=1}^{n} M_{J, Res} \cdot \cos\left(m \cdot J \cdot \alpha - \varphi_{j, res}\right)$$

Sei J das Massenträgheitsmoment der Verbrennungskraftmaschine, so bewirkt das Drehmoment M ($\alpha$) bei einem idealen Geberrad 1 mit dem Winkel $\alpha_{SM}$ zwischen den Zähnen 11, den Segmentzeitverlauf $t_S$ ($\alpha$):

$$t_S(\alpha) = t_{SM} \cdot \underbrace{\left\{1 - \frac{1}{J \cdot 4\pi^2 n^2} \cdot \sum_{j=1}^{n}\left[M_{j,res} \cdot \frac{1}{m^2} \cdot \sin\left(m \cdot j \cdot \left(\alpha - \frac{\alpha_{Sm}}{2}\right) - \varphi_j\right) \cdot \frac{1}{\alpha_{Sm}/2} \cdot \sin\left(m \cdot j \cdot \frac{\alpha_{Sm}}{2}\right)\right]\right\}}_{T_{SND}(\alpha)}$$

Demnach läßt sich der Verlauf von $T_{SND}(\alpha)$ mit Bezugszeichen 36 bezeichnet in Abhängigkeit der Betriebsgrößen Drehzahl n, Ladedruck $p_1$ sowie Einspritzmenge $M_E$ in mehreren Tabellen 29 innerhalb der Motorsteuerung ablegen. Für jeden Zahn 11 mit der Adresse "k" läßt sich ein Tabelleneintrag $T_{SNG}(k)$ ablegen. Damit läßt sich das gesuchte Signal $T_{SNG}(k)$ wie folgt berechnen:

$$T_{SNG}(k) = \frac{t_S(k)}{t_{SM}} + T_{SND}(k)$$

In Fig. 3 ist dieser Zusammenhang dadurch repräsentiert, daß die Segmentzeit $t_S(k)$ mit Bezugszeichen 9 sowie die mittlere Segmentzeit $t_{SM}(k)$ einer Korrektureinheit 14 zugeleitet werden, aus der durch Division die normierte Segmentzeit $t_{SN}(k)$ (Bezugszeichen 15) erzeugt wird. Das Signal 15 sowie das vorstehend ermittelte Signal 36 werden einer Summationsstelle zugeführt, an welcher das gesuchte Signal $T_{SNG}(k)$ gebildet wird. Am Divisor 35 wird das Massenträgheitsmoment der Verbrennungskraftmaschine entsprechend berücksichtigt, wobei der Devisor 35 neben dem Massenträgheitsmoment den an der Summationsstelle 34 ermittelten Wert der Drehzahlverknüpfung 31, der Druckverknüpfung 32 sowie der Einspritzmengenverknüpfung 33 zugeführt wird.

Bei bestimmten Motorbauarten, insbesondere 4- und 6-Zylinder-Reihenmotoren besteht eine Variante des in Fig. 3 dargestellten Verfahrens darin, bei der Bestimmung von $T_{SND}(\alpha)$ nur die erste Hauptordnung des Motors zu berücksichtigen (n = 1). Dabei wird der Motorbetriebspunkt, in dem das Lernverfahren aktiviert wird, so gewählt, daß das Ausgangssignal 36 $T_{SND}(\alpha)$ den Wert Null annimmt.

Eine Variante des erfindungsgemäßen Verfahrens ist in Fig. 4 dargestellt. Bei dem in Fig. 4 dargestellten Verfahren, welches gemäß Fig. 1 in der Fehlerroutine 19 implementiert werden kann, wird die Drehunförmigkeit der Verbrennungskraftmaschine mittels eines Ordnungsfilters abgetrennt. Zum Ausfiltern der Drehunförmigkeit des Verbrennungsmotors wird die Tatsache ausgenutzt, daß diese Drehunförmigkeit nur Frequenzteile auf den Hauptordnungen des Motors aufweist. Mittels diskreter Fourier-Transformation (DFT) wird für diese Frequenzen über jeweils eine Kurbelwellenumdrehung der Betrag $c_J$ und die Phase $\varphi_J$ der entsprechenden Segmentzeitschwankungen bestimmt. Eine nomierte Segmentzeit $T_{SN}(k)$, mit Bezugszeichen 15 bezeichnet, läßt sich beschreiben als Summe der ermittelten Frequenzanteile $c_j$ sowie einem Restsignal $T_{SNG}(k)$

$$T_{SND}(k) = T_{SNG}(k) + \sum_{j=1}^{n} c_{j,X} \cdot \cos(m \cdot j \cdot \alpha - \varphi_{j,x}).$$

Hierbei ist m die Ordnungszahl der ersten Hauptordnung und $\alpha$ der Kurbelwinkel 26 der Verbrennungskraftmaschine. Der Index x kennzeichnet die laufende Nummer der Kurbelwellenumdrehung für die jeweils Betrag c und Phase $\varphi$ ermittelt wurde. Das um die Drehzahlunförmigkeit bereinigte Signal $T_{SNG}(k)$ kann konstruiert werden, indem von der normierten Segmentzeit $T_{SN}(k)$ die aus der vorangehenden Kurbelwellenumdrehung "X-1" bestimmten Signalanteile auf den Hauptordnungen des Motors abgezogen werden:

$$T_{SNG}(k) = T_{SN}(k) - \sum_{j=1}^{n} c_{j,x-1} \cdot \cos(m \cdot j \cdot \alpha - \varphi_{j,x-1})$$

In zur Fig. 3 analoger Weise wird auch bei diesem erfindungsgemäß vorgeschlagenen Verfahren an einer Korrektureinheit 14 die Segmentzeit $t_S(k)$ Bezugszeichen 9 durch die nomierte Segmentzeit $t_{SM}(k)$, Bezugszeichen 10, dividiert. Das an der Korrektureinheit 14 anstehende Ausgangssignal 15 $T_{SN}(k)$ stellt die nomierte Segmentzeit dar. Dieses Signal wird einer Subtraktionsstufe zugeführt, wo die der obigen Gleichung entsprechenden Subtraktionsvorgänge zur Ermittlung des Signales $T_{SNG}(k)$ erfolgen. Innerhalb des Ordnungsfilters 37 sind den Hauptordnungen der Verbrennungskraftmaschine jeweils diskrete Fourier-Transformationsstufen 38 bzw. 43 zugeordnet. Die ermittelten Werte für den Betrag 38.1 sowie für die Phase 38.2 bzw. 43.1 und 43.2 werden jeweils in Speichern 39 abgelegt, wobei sowohl der Kurbelwellenwinkel $\alpha$ als auch die Phase $\varphi$ in die Berechnung des Winkelanteiles 40 bzw. 44 eingehen. Die Werte der Speicher 39 und diejenigen der Winkelermittlung 40 bzw. 44 werden verknüpft und einer Additionsstufe 42 zugeleitet, deren Ausgangssignal an die Subtraktionsstufe zur Ermittlung des Signales $T_{SNG}(k)$ eingehen.

Die Elimination der Hauptordnungen des Motors unter Benutzung der diskreten Fourier-Transformationen (DFT) bietet gegenüber anderen Filterungsverfahren den Vorteil, daß die übrigen Motorordnungen hinsichtlich Betrag c und Phase $\varphi$ nicht verändert werden. Diese Tatsache ist wichtig, da die auf diese Ordnungen verteilten Fehler am Geberrad 1 sonst nicht korrekt rekonstruiert werden könnten und nur unzureichenden Eingang in die Signalkorrektur finden würden.

Bezugszeichenliste

| 1 | Geberrad |
|---|---|
| 2 | Umfangsfläche |
| 3 | Drehsinn |
| 4 | Geberradwelle |
| 5 | Drehwinkel |
| 6 | Signalgeber |
| 7 | Signalauswertung |
| 8 | Zeitmessungen |
| 9 | Segmentzeit $t_s$ (k) |
| 10 | mittlere Segmentzeit $t_{SM}$ (k) |
| 11 | Zähne |
| 12 | ausgewählte Zähne |
| 13 | Mittelwertbildung |
| 14 | Korrektureinheit |
| 15 | nomierte Segmentzeit $T_{SN}$ (k) |
| 16 | Lernstufe |
| 17 | Lemstufen korrigiertes Signal $T_{SNf}$ (k) |
| 18 | Trennstufe |
| 19 | Fehlerermittlungsroutine |
| 20 | Segmentabweichungen durch Geberradfehler |
| 21 | Fehlerbehaftetes Geberrad-Winkelsystem |
| 22 | Zahn |
| 23 | Folgender Zahn |
| 24 | Tatsächlicher Winkel |
| 25 | Winkelversatz $\Delta\alpha$ |
| 26 | Kurbelwellenwinkel $\alpha$ |
| 27 | Referenzmodell |
| 28 | Eingang |
| 29 | Tabellen mit Zuordnung Wert-Geberradzahn |
| 30 | - |
| 31 | Drehzahlverknüpfung (normiert) |
| 32 | Druckverknüpfung (normiert) |
| 33 | Einspritzmenge (normiert) |
| 34 | Additionsstufe |
| 35 | Trägheitswert Motorträgheitsberücksichtigung |
| 36 | Ausgangssignal $T_{SND}$ (k) |
| 37 | Ordnungsfilter |
| 38 | Diskrete Fourier-Transformation erste Hauptordnung |
| 38.1 | Betragswert c |
| 38.2 | Phasenwert $\varphi$ |
| 39 | Speicher |
| 40 | Winkelparameterermittlung |
| 41 | Verknüpfung |
| 42 | Additionsstufe |
| 43 | Diskrete Fourier-Transformation n-te Hauptordnung |
| 44 | Winkelparameterermittlung |

**Patentansprüche**

**1.** Verfahren zur Drehzahl- und/oder Winkelerfassung an rotierenden Bauteilen einer Verbrennungskraftmaschine mit einem Geberrad (1), an dessen Umfangsfläche (2) k Zähne (11, 12) aufgenommen sind, die von einem oder mehreren Signalgebern (6) abgetastet werden, *über welche Segmentzeiten TS (k) von zwei aufeinanderfolgenden Zähnen (11) ermittelt werden,* **dadurch gekennzeichnet, dass** *die gemessenen Segmentzeiten TS (k) (9) innerhalb einer*

*Korrekturroutine (19) entweder*

• anhand eines Referenzmodelles (27), in dem der jeweilige Betriebspunkt *der Verbrennungskraftmaschine hinsichtlich der Drehzahl n, des Druckes $p_1$ und hinsichtlich der Einspritzmenge $m_E$ definiert ist, unter Ermittlung eines Geberradfehler repräsentierenden Signales $T_{SNG}$ (k) Fehler des Geberrades (1) aus der Beziehung:*

$$T_{SNG}\,(k) = \frac{t_s(k)}{t_{SM}} + T_{SNG}^{D}\,(k),$$

*wobei der Verlauf des Signals $T_{SND}$ (k) in einer Tabelle 29 der Geberradzähne (11, 12) abhängig von den Betriebsgrößen n, $p_1$ und $m_e$ der Verbrennungskraftmaschine abgelegt ist, den Zähnen (11, 12) des Geberrades (1) jeweils ein Eintrag zugeordnet ist, unter Verknüpfung von Einträgen der Tabelle (29) mit normierten Betriebsgrößen für Drehzahl, Druck und Einspritzmenge* korrigiert werden,
oder
• anhand eines Ordnungsfilters (37) mit mindestens einer der Hauptordnungen der Verbrennungskraftmaschine zugeordneten *FFT-Stufe (38, 43)* um die Fehler des Geberrades (1) korrigiert werden, *wobei die die Fehler des Geberrades (1) repräsentierenden Signale $T_{SNG}$ (k) aus der Differenz einer normierten Segmentzeit $T_{SN}$ (k) und den aus der vorhergehenden Kurbelwellenumdrehung (x - 1) bestimmten Signalanteilen der Hauptordnungen der Verbrennungskraftmaschine gemäß der Beziehung*

$$T_{SNG}\,(k) = T_{SN}(k) - \sum_{j=1}^{n} c_{j,x\text{-}1} \bullet cos\,(m \bullet j \bullet \alpha - \varphi_{j,\,x\text{-}1})$$

*ermittelt werden, und $c_j$ den Betrag der zugehörigen Segmentzeitschwankung, $\varphi_j$ die Phase der zugehörigen Segmentzeitschwankung, $t_S$ (k) die Segmentzeit des k-ten Segmentes, $T_{SM}$ die mittlere Segmentzeit, $T_{SMD}$ die normierte Segmentzeit im die Ordnungszahl des ersten Hauptordnung und $\alpha$ den Kurbelwinnel der VVerbrennungskraftmaschine darstellen*

2. Verfahren gemäß Anspruch 1, **dadurch gekennzeichnet, dass** aus der ermittelten Segmentzeit (9) $t_S$ (k) eine mittlere Segmentzeit $t_{SM}$ (k) (10) errechnet wird, aus der eine normierte Segmentzeit $T_{SN}$ (k) (15) abgeleitet wird.

3. Verfahren gemäß Anspruch 1, **dadurch gekennzeichnet, dass** die von Geberradfehlern bereinigten Drehzahlsignale $n_1$ (k) unter Berücksichtigung der Drehunförmigkeit gemäß

$$n_1\,(k) = \frac{\alpha SM}{2\pi} \cdot \frac{1}{t_s\,(k)\cdot[1 - T_{SNGf}\,(k)]}$$

bestimmt wird.

4. Verfahren gemäß Anspruch 1, **dadurch gekennzeichnet, dass** das von Geberradfehlern bereinigte Drehzahlsignal aus

$$n_2\,(k) = \frac{\alpha_{SM}}{2\pi} \cdot \frac{1}{t_{SM}\,(k)\cdot T_{SNG}\,(k)[1 - T_{SNGf}\,(k)]}$$

bestimmt wird.

5. Verfahren gemäß Anspruch 1, **dadurch gekennzeichnet, dass** der wahre Winkel (24) der Verbrennungskraftmaschine α in das fehlerbehaftete Winkelsystem des Geberrades (1) gemäß der Beziehung:

$$\alpha^*{}_{Soll} = (\alpha_{Soll} - \Delta\alpha)\,[1 - T_{SNGf}\,(k\text{-}1)]$$

abgebildet wird.

6. Verfahren gemäß Anspruch 1, **dadurch gekennzeichnet, dass** zur Bestimmung von $T_{SND}\,(\alpha)$ nur die erste Hauptordnung des Motors berücksichtigt wird.

7. Verfahren gemäß einem oder mehreren der vorhergehenden Ansprüche, **dadurch gekennzeichnet, dass** für die die Drehunförmigkeit der Verbrennungskraftmaschine aufweisenden Frequenzanteile der Hauptordnungen der Verbrennungskraftmaschine mittels diskreter Fourier-Transformation (38, 43) über eine Kurbelwellenumdrehung der Betrag $c_J$ (38.1, 43.1) und die Phase (38.2, 43.2) bestimmt wird.

**Claims**

1. Method for rotational speed detection and/or angle detection on rotating components of an internal combustion engine having a sensor wheel (1) on whose circumferential surface (2) there are accommodated k teeth (11, 12) which are scanned by one or more signal transmitters (6) via which segment times TS (k) of two consecutive teeth (11) are determined, **characterized in that** during a correction routine (19) the measured segment times TS (k) (9) either

   • are corrected, with the aid of a reference model (27) in which the respective operating point of the internal combustion engine is defined with regard to the rotational speed n and the pressure $p_1$ and with regard to the injection quantity $m_E$, while determining a signal $T_{SNG}$ (k) representing a sensor wheel error, by the errors of the sensor wheel (1) from the relationship:

$$T_{SNG}(k) = \frac{t_s(k)}{t_{SM}} + T_{SND}(k),$$

   the profile of the signal $T_{SND}$ (k) being stored in a table 29 of the sensor wheel teeth (11, 12) as a function of the operating variables n, $p_1$ and $m_e$ of the internal combustion engine, and the teeth (11, 12) of the sensor wheel (1) respectively being assigned an entry, this being done by combining entries of the table (29) with normalized operating variables for rotational speed, pressure and injection quantity,
   or
   • are corrected by the errors of the sensor wheel (1) with the aid of an order filter (37) having at least one FFT stage (38, 43) assigned to the main orders of the internal combustion engine, the signals $T_{SNG}$(k) representing the errors of the sensor wheel (1) being determined from the difference between a normalized segment time $T_{SN}$ (k) and the signal components, determined from the preceding crankshaft revolution (x - 1), of the main orders of the internal combustion engine in accordance with the relationship

$$T_{SNG}(k) = T_{SN}(k) - \sum_{j=1}^{n} c_{j,x-1} \bullet cos(m \bullet j \bullet \alpha - \varphi_{j,x-1}),$$

   and $C_j$ representing the absolute value of the associated segment time fluctuation, $\varphi_j$ the phase of the associated

segment time fluctuation, $t_s$ (k). the segment time of the kth segment, $T_{SM}$ the mean segment time, $T_{SMD}$ the normalized segment time, m the ordinal number of the first main order, and $\alpha$ the crank angle of the internal combustion engine.

2. Method according to Claim 1, **characterized in that** a mean segment time $t_{SM}$ (k) (10) from which a normalized segment time $T_{SN}$ (k) (15) is derived is calculated from the segment time (9) $t_S$ (k) determined.

3. Method according to Claim 1, **characterized in that** the rotational speed signals $n_1$ (k) purged of sensor wheel errors are determined taking account of the rotational nonuniformity in accordance with

$$n_1(k) \;=\; \frac{\alpha SM}{2\pi} \cdot \frac{1}{t_s(k) \cdot \left[1 - T_{SNGf}(k)\right]} \; .$$

4. Method according to Claim 1, **characterized in that** the rotational speed signal purged of sensor wheel errors is determined from

$$n_2(k) \;=\; \frac{\alpha_{SM}}{2\pi} \cdot \frac{1}{t_{SM}(k) \cdot T_{SNG}(k)\left[1 - T_{SNGf}(k)\right]} \; .$$

5. Method according to Claim 1, **characterized in that** the true angle $\alpha$ (24) of the internal combustion engine is projected into the defective angle system of the sensor wheel (1) in accordance with the relationship:

$$\alpha*_{Soll} \;=\; (\alpha_{Soll} \;-\; \Delta\alpha)\left[1 - T_{SNGf}(k-1)\right].$$

6. Method according to Claim 1, **characterized in that** only the first main order of the engine is taken into account for determining $T_{SND}$ ($\alpha$).

7. Method according to one or more of the preceding claims, **characterized in that** the absolute value $c_J$ (38.1, 43.1) and the phase (38.2, 43.2) are determined for the frequency components, exhibiting the rotational nonuniformity of the internal combustion engine, of the main orders of the internal combustion engine by means of discrete Fourier transformation (38, 43) over a crankshaft revolution.

**Revendications**

1. Procédé de saisie de l'angle et/ou de la vitesse de rotation sur des composants rotatifs d'un moteur à combustion interne comprenant une roue-émetteur (1), dotée sur sa surface périphérique (2) de k dents (11, 12) détectées par un ou plusieurs transmetteurs de signaux (6), sur lesquelles ont détermine des durées par segment TS (k) de deux dents (11) successives,
**caractérisé en ce que**
les durées mesurées par segment TS (k) sont corrigées au sein d'un sous-programme (routine) de correction (19),

   - soit à l'aide d'un modèle de référence (27), dans lequel le point de fonctionnement respectif du moteur à combustion interne est défini par rapport à la vitesse de rotation n, à la pression $p_1$ et par rapport au débit d'injection $m_E$, en déterminant un signal $T_{SNG}$ (k), qui représente l'erreur de la roue-émetteur (1) par la relation :

$$T_{SNG}(k) = \frac{t_s(k)}{t_{SM}} + T_{SND}(k),$$

dont la courbe du signal $T_{SND}$ (k) est enregistrée dans un tableau (29) des dents de la roue-émetteur (11, 12) en fonction des grandeurs de fonctionnement n, $p_1$ et $m_e$ du moteur à combustion interne, une entrée étant associée à chaque fois aux dents (11, 12) de la roue-émetteur (1), et en associant des entrées du tableau (29) avec des grandeurs de fonctionnement normalisées pour la vitesse de rotation, la pression et le débit d'injection, - soit en les corrigeant de l'erreur de la roue-émetteur (1) à l'aide d'un filtre de régimes (37), comprenant au moins un étage FFT (38, 43) associé aux régimes principaux du moteur à combustion interne, en calculant les signaux $T_{SNG}$ (k) représentant les erreurs de la roue-émetteur (1) à partir de la différence d'une durée normalisée par segment $T_{SN}$ (k) et des parties de signaux définies à partir de la rotation du vilebrequin précédente (x - 1) des régimes principaux du moteur à combustion interne selon la relation :

$$T_{SNG}(k) = T_{SN}(k) - \sum_{j=1}^{n} c_{j,x-1} \bullet \cos(m \bullet j \bullet \alpha - \varphi_{j,x-1}),$$

formule dans laquelle $c_j$ représente la quantité de variation correspondante des durées par segment, $\varphi_j$ la phase de la variation correspondante des durées par segment, $t_s$ (k) la durée par segment du k-ième segment, $T_{SM}$ la durée moyenne par segment, $T_{SMD}$ la durée normalisée par segment, m le régime du premier régime principal et $\alpha$ le vilebrequin du moteur à combustion interne.

2. Procédé selon la revendication 1,
   **caractérisé en ce qu'**
   on calcule une durée moyenne par segment $t_{SM}$ (k) (10) à partir de la durée par segment (9) $t_s$ (k) déterminée, et une durée normalisée par segment $T_{SN}$ (k) (15) est dérivée de celle-ci.

3. Procédé selon la revendication 1,
   **caractérisé en ce que**
   les signaux de vitesse de rotation $n_1$ (k) nettoyés des erreurs de la roue-émetteur sont définis en prenant en considération la difformité rotative comme suit :

$$n_1(k) = \frac{\alpha SM}{2\pi} \cdot \frac{1}{t_s(k) \cdot [1 - T_{SNGf}(k)]}.$$

4. Procédé selon la revendication 1,
   **caractérisé en ce que**
   le signal de vitesse de rotation nettoyé des erreurs de la roue-émetteur est défini à partir de :

$$n_2(k) = \frac{\alpha_{SM}}{2\pi} \cdot \frac{1}{t_{SM}(k) \cdot T_{SNG}(K)[1 - T_{SNGf}(k)]}.$$

5. Procédé selon la revendication 1,
   **caractérisé en ce que**
   l'angle exact (24) du moteur à combustion interne $\alpha$ est représenté dans le système angulaire de la roue-émetteur (1) pourvu d'erreurs selon la relation suivante :

$$\alpha^*{}_{Soll} = (\alpha_{Soll} - \Delta\alpha)[1 - T_{SNGf}(k-1)].$$

6. Procédé selon la revendication 1,
   **caractérisé en ce que**
   pour définir $T_{SND}$ ($\alpha$), seul le premier régime principal du moteur est pris en compte.

7. Procédé selon une ou plusieurs des revendications précédentes,
**caractérisé en ce que**
pour la proportion de fréquence des régimes principaux du moteur à combustion interne, qui présente la difformité rotative du moteur à combustion interne, la quantité $c_j$ (38.1, 43.1) et la phase (38.2, 43.2) sont définies sur une rotation du vilebrequin à l'aide d'une transformation de Fourier discrète (38, 43).

EP 1 272 858 B1

Fig.1a

$t_S(k)$

Fig.1b

$t_S(k)$   $T_{SN}(k)$   $T_{SNf}(k)$

$t_{Sm}(k)$

Fig.1c

$t_S(k)$   $T_{SN}(k)$   $T_{SNG}(k)$   $T_{SNG(f)}(k)$

$t_{Sm}(k)$

# Fig.2

$$\alpha^* = \frac{t}{t_S\,(k-1)} \cdot \alpha_{Sm}$$

$$\alpha^*_{soll} = (\alpha_{soll} - \triangle\alpha) \cdot [1 - T_{SNGf}(k-1)]$$

$$\triangle\alpha = \sum_{j=0}^{k-1} T_{SNGf}(j) \cdot \alpha_{Sm}$$

EP 1 272 858 B1

Fig.3

Fig.4

16

## IN DER BESCHREIBUNG AUFGEFÜHRTE DOKUMENTE

### In der Beschreibung aufgeführte Patentdokumente

- DE 4406606 A
- DE 19540674 A1
- US 5377535 A
- US 6021758 A